# EUROPEAN PATENT SPECIFICATION

(11) **EP 4 419 797 B1**
(45) Date of publication and mention of the grant of the patent: **25.03.2026**
(21) Application number: 22817234.2
(22) Date of filing: 11.11.2022
(51) Int. Cl.: F03D 17/00

(54) **METHOD OF INSPECTING AN ADHESIVE LAYER**
VERFAHREN ZUR INSPEKTION EINER KLEBESCHICHT
PROCÉDÉ D'INSPECTION D'UNE COUCHE ADHÉSIVE

(30) Priority: 01.12.2021 EP 21211625
(43) Date of publication of application: 28.08.2024
(73) Proprietor: Siemens Gamesa Renewable Energy A/S, 7330 Brande (DK)
(72) Inventor: BENNANI KEMMOUN, Hicham, 8500 Grenaa (DK); BIRK, Henrik Okkels, 9520 Skørping (DK); DEKOVIC, Natasa, 9000 Aalborg (DK); DETROYAT, Alexis, 9000 Aalborg (DK); DIRCKS, Stefan, 24976 Handewitt (DE); JENSEN, Kim, 9520 Skoerping (DK); NIELSEN, Per, 9310 Vodskov (DK); SOERENSEN, Joergen, 9700 Broenderslev (DK); THOMSEN, Anders Haslund, 9270 Klarup (DK)
(74) Representative: SGRE-Association
(86) International application number: PCT/EP2022/081648
(87) International publication number: WO 2023/099170

(56) References cited:
- EP-A2- 2 275 670
- EP-B1- 1 373 723
- US-A1- 2015 267 688
- CHIA CHEN CIANG ET AL: "Structural health monitoring for a wind turbine system: a review of damage detection methods", MEASUREMENT SCIENCE AND TECHNOLOGY, IOP, BRISTOL, GB, vol. 19, no. 12, 1 December 2008 (2008-12-01), pages 122001, XP020144300, ISSN: 0957-0233, DOI: 10.1088/0957-0233/19/12/122001

## Description

### Background

During its lifetime, a rotor blade of a wind turbine can be exposed to high loads and extreme weather conditions. The leading edge of the rotor blade is particularly susceptible to damage from impact - for example hail, ice, sand or other particles - as the rotor blade sweeps through the air during operation of the wind turbine. The "leading edge" generally refers to the region on either side of the junction between pressure side and suction side. To protect the leading edge of a rotor blade, it is known to apply a protective strip comprising one or more layers of flexible material such as polyurethane onto the leading edge. For example, a protective strip of impact-absorbing material can extend some distance on either side of the junction between pressure side and into the suction side. Such a protective strip is usually referred to as a leading-edge protector (LEP), and can be glued onto the leading edge of the rotor blade using a suitable adhesive. The adhesive layer must be free of air cavities or foreign bodies in order to achieve a necessary level of quality. The presence of such defects in the adhesive layer itself or between the adhesive layer and the rotor blade or LEP can have a detrimental effect. For example, an air pocket can result in partial or even complete detachment of a leading-edge protector during the lifetime of the rotor blade, resulting in a reduction of the aerodynamic performance of the wind turbine.

It is therefore necessary to thoroughly inspect the adhesive bond between LEP and rotor blade, preferably before the rotor blade is mounted to the wind turbine. In one approach, skilled technicians perform a manual inspection of the adhesive bond at the leading edge, since a relatively large air pocket or similar defect may manifest as an uneven surface that can be detected by hand. In an alternative approach, a skilled technician may direct a bright light sideways at the leading edge area to identify surface irregularities from the shadows cast by the bright light. These inspection techniques rely heavily on experience and skill. Furthermore, the procedures are time-consuming and require a consistently high level of concentration by the person doing the inspection.

Another way of detecting defects in the adhesive layer is to deploy a 3D scanner to scan the length of the LEP. However, such scanners are sensitive to variations in ambient light, but it is difficult to achieve a consistent ambient light level for each scan procedure. In a further approach, an acoustic inspection technique such as ultrasound can be used to detect air cavities. However, the LEP and adhesive layer are generally very similar materials (e.g. elastomer), and an ultrasound inspection will fail to detect a defect in which the LEP and adhesive layer are not bonded together but are in physical contact (i.e. without an air pocket between), since the materials have similar acoustic impedance. Another problem with ultrasound inspection is the need to press the ultrasound device against the rotor blade surface during the inspection, and this action itself can close a small air pocket or void directly underneath the sensor, and that the air pocket will go undetected. Therefore, an ultrasound inspection of the adhesive layer of an LEP may fail to detect air inclusions.

The quality of these known non-manual inspection techniques therefore depends on factors that cannot be controlled to a sufficient degree, with the result that inspection results may be inaccurate and difficult to interpret with any degree of confidence.

In the case of a correctly identified air-pocket in the adhesive layer of an LEP, the LEP layers at that location can be removed or lifted in order to remedy the defect, and then re-attached. However, each prior art approach can result in failing to identify a defect ("false negative" inspection result), so that an undiscovered defect such as an air pocket may later lead to detachment of the LEP; or incorrectly identifying a defect where there is none ("false positive" inspection result), so that LEP layers are unnecessarily removed to remedy a non-existent defect.

A further problem arises from the shape of the adhesive layer underneath a leading-edge protector. Instead of being flat, the adhesive layer has the same curved shape as the LEP, i.e. the adhesive layer is essentially U-shaped, extend outward from the leading edge some distance into the pressure side and some distance into the suction side. This curved shape makes it more difficult to manipulate the tools and equipment of a known inspection apparatus

Documents considered during the patent prosecution are i.a.: "Structural health monitoring for a wind turbine system: a review of damage detection methods", MEASUREMENT SCIENCE AND TECHNOLOGY, IOP, BRISTOL, GB, vol. 19, no. 12, 1 December 2008 (2008-12-01), page 122001, ISSN: 0957-0233, DOI: 10.1088/0957-0233/19/12/122001, and the patent documents EP 2 275 670 A2, EP 1 373 723 B1 and US 2015/267688 A1.

It is therefore an object of the invention to provide a method of inspecting an LEP adhesive layer that overcomes the problems described above.

This object is achieved by the claimed inspection apparatus and by the claimed method of inspecting an adhesive layer at the leading edge region of a wind turbine rotor blade.

### Description

According to the invention, the adhesive layer inspection apparatus comprises a heating assembly configured to direct heat at a portion of the adhesive layer between the outer edges of the adhesive layer; an infrared imaging means arranged to obtain an infrared image of the heated portion; and a displacement means adapted to move the inspection apparatus alongside the rotor blade during operation of the heating assembly and the infrared imaging means to facilitate infrared imaging of the entire adhesive layer.

In the context of the invention, the "leading edge" shall be understood to comprise not only the junction between pressure side and suction side of the rotor blade, but also parts of the pressure side and suction side extending some distance outward from that junction. As explained above, a leading edge protector can be an essentially U-shaped polymer body that is bonded to the U-shaped "leading edge" by a polymer adhesive layer, and this adhesive layer may extend some distance from the long edges of the LEP, and can taper gradually to meet the surface of the rotor blade. In the context of the invention, an adhesive layer shall be understood to comprise an essentially rectangular strip of adhesive arranged along the leading edge of the rotor blade, extending some distance either side into the pressure side and the suction side.

In the inventive inspection apparatus, the heating assembly is shaped to direct heat or thermal energy at the surface of a leading edge protector, i.e. over the entire width, including the entire adhesive layer, which as explained above may extend some distance into the pressure side and also into the suction side. The heating assembly is essentially U-shaped, conforming to the essentially U-shaped form of the leading edge when viewed in cross-section.

The invention is based on the premise that a uniform and consistent adhesive layer will appear uniform in an infrared image after heating, but that any air pocket or other interruption in the uniformity of the adhesive layer will appear as an anomaly in such an infrared image. This is because a defect such as an air pocket will reach a different temperature than the surrounding adhesive on account of their different thermal properties. An infrared sensor detects these different temperatures as different intensity values, and the sensor generally outputs an intensity value for each sensor pixel. Depending on the chosen IR device and the desired resolution, the sensed IR intensities can be presented as 16-bit values, 24-bit values, etc. Each sensor pixel is generally associated with a corresponding image pixel, and the IR sensor output can be "translated" into visible light, i.e. each pixel in a subsequently rendered RGB image will be associated with a colour, and each such colour is related to a specific temperature or temperature range.

An advantage of the inventive inspection apparatus is that it can greatly simplify the task of assessing the quality of the adhesive bond between an LEP and the rotor blade surface. Instead of first inspecting the pressure side of an LEP to assess the quality of the underlying adhesive layer and then inspecting the suction side of the LEP to assess the quality of the underlying adhesive layer, the invention allows the entire adhesive layer to be inspected in a single procedure, so that anomalies or defects can be detected more quickly and also more accurately, and can be remedied before the rotor blade leaves the manufacturing facility. The apparatus can be realised to move along the leading edge in a completely automated manner, i.e. without any intervention from a user.

The inventive method of inspecting an adhesive layer applied about the leading edge of a wind turbine rotor blade using the inventive inspection apparatus comprises the steps of
A) actuating the heating assembly to direct heat at a portion of the adhesive layer;
B) actuating the infrared imaging means to obtain a number of infrared images of the heated portion; and
displacing the inspection apparatus alongside the rotor blade over the extent of the adhesive layer while repeating steps A and B.

The inventive method can be performed in a largely autonomous manner, and is significantly more efficient in comparison with traditional inspection methods. In the inventive method, an air cavity or other defect in the LEP adhesive layer can be reliably detected without requiring human skill, years of experience or prolonged levels of concentration, and without requiring specific ambient light levels or the absence of background noise. The invention essentially eliminates the "false negatives" and "false positives" associated with a manual inspection technique that relies on a human sense such as touch, sight and hearing, or a non-manual inspection technique whose accuracy depends on a certain ambient light level or ambient noise level.

Particularly advantageous embodiments and features of the invention are given by the dependent claims, as revealed in the following description. Features of different claim categories may be combined as appropriate to give further embodiments not described herein.

During the inventive inspection process, the rotor blade can be held at any suitable orientation that permits the apparatus can travel alongside the leading edge. In the following, without restricting the invention in any way, it may be assumed that the inspection procedure is carried out on a rotor blade that has been arranged with its chord plane in a vertical orientation, and with the leading edge of the rotor blade at the underside, In this orientation, the leading edge of the rotor blade is referred to as "pointing downwards". The rotor blade can be held using any suitable equipment, for example a root end frame to hold the circular root end, and an airfoil frame arranged at some point along the airfoil to support the rest of the rotor blade. Preferably, the region to be imaged is accessible to the inspection apparatus over its entire length, otherwise the inspection procedure can be carried out in stages.

In a preferred embodiment of the invention, the heating assembly (or simply "heater") and the infrared imaging means (or simply "camera") are mounted on a support, and the displacement means is realised to move the support relative to the rotor blade. The displacement means can be realised in any suitable manner. For example, the support can be realised to move along a fixed track or rails, and the leading edge of the rotor blade is brought into correct alignment relative to the track in preparation for the inspection procedure.

In a particularly preferred embodiment of the invention, the heating assembly and the infrared imaging means are mounted on a wheeled support such as a trolley or cart, and the displacement means comprises a motor, for example a battery-operated DC motor, configured to drive the wheels of the support. Preferably, elements of the displacement means are controlled such that the inspection apparatus is moved at an essentially constant rate or uniform speed alongside the leading edge of the rotor blade.

In a particularly preferred embodiment of the invention, the displacement means further comprises a guide assembly adapted to maintain an essentially constant distance between the heating assembly and the adhesive layer. A number of distance sensors may be deployed to monitor the distance between, for example, a heat source and the surface of the rotor blade. For example, the leading edge of a swept rotor blade may depart significantly from a straight line, and the displacement means is preferably realised to follow the contour of the leading edge. For example, in the case of a rotor blade held with its chord plane essentially vertical and its leading edge facing downwards, the displacement means can be constructed to tilt the configuration of heating assembly and imaging apparatus so that these "follow" the upwardly deflected leading edge. To this end, one or more vertical elements of the support and/or the heating assembly and/or the imaging assembly can be extendable, and the displacement means can be realised to actuate these accordingly in order to maintain a desired distance between the heater and the heated region, and between the camera and the imaged region.

Similarly, the leading edge of a rotor blade with some degree of pre-bend will also not follow a straight line. In this case, the displacement means can be controlled to follow the curved trajectory of the leading edge.

In a preferred embodiment of the invention of the invention, at least the heating assembly and the infrared imaging means are mounted on a sturdy support assembly which can be moved, or which can move autonomously, parallel to the leading edge over the end-to-end length of the LEP. An advantage of mounting the heating assembly and the infrared imaging means on a support such as a trolley or cart is that the distance between heater and camera remains constant, and it is easier to ensure that the sequence of images is captured under similar conditions.

Preferably, the inspection apparatus comprises a means of propelling it along the extent of the adhesive layer. In a preferred embodiment of the invention, the inspection apparatus is equipped with an electric motor and a power supply, for example a battery-operated electric motor arranged to turn the wheels of the support assembly. The power supply may also provide power to any extendible elements, for example telescopic legs of the support trolley, a telescopic camera assembly support, a telescopic heater support, etc.

The heating assembly may comprise one or more heat sources. In a particularly preferred embodiment of the invention, the heating assembly comprises a plurality of heat sources arranged to direct heat about the leading edge to cover at least the edge-to-edge extent of the LEP adhesive layer.

Any suitable type of heat source can be deployed. In a preferred embodiment of the invention, a heat source is a curing lamp, for example the type of lamp used to accelerate the drying or curing of paint. Such a curing lamp can emit thermal energy over a suitable part of the spectrum, for example in the infrared range. In an exemplary embodiment, three or more such lamps can be arranged in an essentially U-shaped configuration to heat the adhesive layer about the leading edge. The heat sources remain switched on throughout the inspection procedure as the inspection apparatus moves along the leading edge of the rotor blade. As a result, the hottest region appears to travel along the leading edge as "wave of heat", at the same rate as the inspection apparatus.

The inspection apparatus can comprise any number of cameras. Preferably, the inspection apparatus comprises a camera directed at the suction side of the leading edge and arranged to obtain an image of that part of the heated portion, and a camera directed at the pressure side of the leading edge and arranged to obtain an image of that part of the heated portion. Collectively, the two cameras have an essentially U-shaped field of view. Of course, three or more cameras can be arranged in an essentially U-shaped configuration to capture infrared images of the heated region. The cameras follow the propagation of the U-shaped "wave of heat", and capture an infrared image in their collective U-shaped field of view.

The inventive method preferably comprises a step of joining images to obtain a composite image of a heated portion, from at least one image of the heated portion at the pressure side and at least one image of the heated portion at the suction side. The inventive method preferably also comprises a step of joining images to obtain a composite image of the entire adhesive layer. For example, a sequence of composite images obtained for a series of heated portions can be combined to give a single composite image in which the entire adhesive layer can be identified. In such a composite thermal image, the curved adhesive layer is rendered as a 2D rectangular shape and can be viewed in a suitable display or monitor.

Preferably, the heat source(s) maintain an essentially constant distance from the surface of the rotor blade, **i.e.** from the surface of the LEP and the adhesive layer, in order to obtain consistent results. In a particularly preferred embodiment of the invention, the inspection apparatus is equipped with a guide assembly which ensures that the heating assembly maintains a constant distance between heat sources and rotor blade surface. For example, a guide assembly may comprise a number of spring-mounted rollers arranged to roll along the surface of the rotor blade. These can be arranged in any suitable configuration, for example pairwise, with one roller of a pair arranged to press against the pressure side of the rotor blade, and the other roller of a pair arranged to press against the suction side of the rotor blade. For example, a first pair of spring-mounted rollers may be arranged ahead of the heating assembly (and preferably outside of the range of the heating lamps), and a second pair of rollers may be arranged beside the infrared imaging means. In a further preferred embodiment of the invention, the inspection apparatus comprises one or more pressure sensors and a feedback control unit.

Each roller arrangement can include a suitable configuration of pressure sensors, for example. The pressure sensors can sense the pressure between a roller and the rotor blade surface, and the control unit can adjust the height of the relevant assembly (heating assembly; imaging arrangement) **so** that the elements of each assembly (heating lamps; image sensors) maintain an essentially constant distance to the surface of the LEP and the adhesive layer.

Preferably, successive sections of the adhesive layer are heated at the same rate and for the same length of time, in order to obtain useful results. To this end, in a preferred embodiment of the invention, the heating assembly is moved at a constant velocity while the heat sources direct heat at the adhesive layer for the same length of time. Preferably, the inspection apparatus also comprises a position tracking means adapted to determine the position of the infrared imaging means relative to the rotor blade, **i.e.** relative to a reference point at some position on the rotor blade. A position tracking means can assist in determining the geometrical coordinates of a detected anomaly. A position tracking means can be realised using any suitable device, for example an encoder arranged in a guide roller or a wheel of the support trolley, for example.

Throughout the inspection procedure, the position of the infrared imaging means can be defined relative to a fixed reference, for example relative to the beginning of the adhesive strip, **i.e.** relative to the first "short **edge" of** the essentially rectangular adhesive strip. This edge can be detected from image analysis on the basis of the different thermal properties of the adhesive and the composite material of the rotor blade. This "vertical" short edge can be the Y-axis, and the "horizontal" leading edge can be the X-axis of a local 2D coordinate system, and the coordinates of an anomaly can be given for this coordinate system. Similarly, the other "outer" end of the adhesive strip can be detected from image analysis.

The inventive inspection apparatus preferably also comprises an image processing module configured to detect an anomaly in the adhesive layer from evaluation of the infrared images collected by the imaging apparatus. As indicated above, an anomaly or defect can be deduced from unexpected intensity values in a coherent group of pixels. The position and size of the detected anomaly can be reported to a user. To this end, the inventive inspection apparatus preferably also comprises a defect reporting module configured to report a detected anomaly and the position of that anomaly. An alarm can be issued when an anomaly is detected, along with position coordinates for the anomaly and an estimation of its size.

As indicated above, false-colour images of the heated regions can be presented to a user for viewing. For example, it is traditional to associate cooler temperatures with green/blue/violet colours, while warmer colours are generally indicated by yellow/orange/red, with red being "hottest" and violet being "coldest". Since the heating assembly heats the adhesive layer, any defect such as an air inclusion or void will appear "cooler" in the associated infrared image and can be detected from a visual inspection, or from image analysis. In this way, image analysis module detects an anomaly by rendering visible any deviation from an expected temperature. Any suitable colour palette can be used to identify defects such as air inclusions or cavities, and each colour can be assigned to a specific temperature or temperature range.

To assist in correctly assessing the severity of a defect in the adhesive layer, the false colour image can be overlaid with a grid, and the grid spacing is adjusted according to the distance between camera and LEP. For example, a grid spacing of 10 mm may be overlaid on the false colour image. Any defect greater than a certain minimum **(e.g.** greater than 1 mm) may be deemed sufficiently large to warrant correction by opening the adhesive layer at that location to repair the defect. A grid overlaid on the false colour image can also help the user to measure the distance between any two defects.

In a further preferred embodiment of the invention, the inspection apparatus comprises a temperature sensor arranged to measure the temperature of the heated portion. For example, the output of the temperature sensor can be used to determine when that section of the LEP and adhesive layer have reached a desired temperature, and when to cease heating that portion of the adhesive region. The heat sources can then be switched off, and the cameras capture one or more images of the heated region. Equally, the inspection apparatus can be moved along to bring the heating arrangement into place in readiness to heat the following section, while the cameras capture one or more images of the most recently heated section.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows an embodiment of the inventive inspection apparatus in place below a wind turbine rotor blade;
Figure 2 is a perspective view of an embodiment of the inventive inspection apparatus;
Figures 3 and 4 illustrate two consecutive steps of the inventive method;
Figure 5 is a simplified schematic of an exemplary infrared image generated in the course of the inventive method;
Figure 6 shows a simplified block diagram of an exemplary embodiment of the inventive inspection apparatus;
Figure 7 shows exemplary images of a leading edge region of a rotor blade;
Figure 8 shows the inventive inspection apparatus and a pre-bent rotor blade;
Figure 9 shows the inventive inspection apparatus and a swept rotor blade.

In the diagrams, like numbers refer to like objects throughout. Objects in the diagrams are not necessarily drawn to scale.

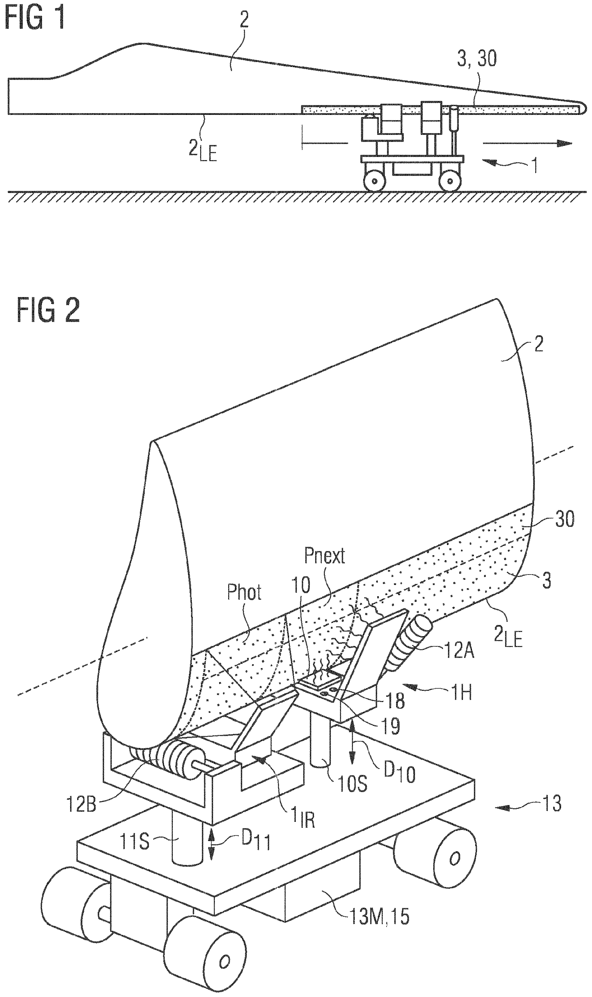

Figure 1 shows a rotor blade 2 arranged at a height above ground and supported by a suitable holding arrangement (not shown). The leading edge LE of the rotor blade 2 is covered by a leading edge protector 3, which can comprise a flexible shell 3 that is glued onto the rotor blade 2 using a suitable adhesive 30. An embodiment of the inventive inspection apparatus 1 is shown. Details of the heating assembly and imaging assembly will be given in Figures 2 - 4. Here, the diagram indicates how the inspection apparatus 1 may move relative to the rotor blade 2, to capture infrared images of the heated adhesive layer 30 along the entire length of the leading edge protector **3.** Once the inspection apparatus is placed in a suitable starting position (near the inboard short edge of the LEP, for example), it commences to move autonomously along the rotor blade, maintaining a constant rate of movement and a constant distance to the heated surface as will be explained below, until it reaches the other end of the LEP (the outboard end near the tip, for example).

Figures 2 - 4 show an exemplary realisation of the inventive inspection apparatus 1 and a section of a (complete) rotor blade 2 which has a leading edge protector 3 bonded in place by an adhesive layer 30 (collectively indicated by a stippled pattern). The diagrams show a heating assembly 1H with number of heat sources 10, for example infrared curing lamps. The diagrams also show a camera assembly 1IR with a number of infrared cameras 11. The heat sources 10 are arranged in an essentially U-shaped fashion so that the adhesive layer 30 of the LEP 3 is "covered" from edge-to-edge, i.e. the heat sources 10 direct thermal energy at all of the current portion of the adhesive layer 30 on the suction side 2S, the pressure side 2P and at the transition 2_{LE} between suction side and pressure side. Of course, the heat sources 10 can direct thermal energy beyond the long edges of the adhesive layer 30 onto the rotor blade surface, but this is not relevant. The cameras 11 are also arranged in an essentially U-shaped fashion so that the heated adhesive layer 30 can be imaged correctly.

Figure 2 also shows a support assembly 13, in this case a trolley with wheels which can be turned by an electric motor 13M. To ensure a constant distance between heat source 10 and the surface of the region to be imaged, the inspection apparatus 1 is equipped with an arrangement of spring-loaded rollers 12A, 12B arranged to ensure that a desired distance is maintained between the heat sources 10 and the surface of the rotor blade; and to ensure that a desired distance is maintained between the cameras 11 and the surface of the rotor blade. In this exemplary embodiment, a pair of spring-loaded rollers 12A maintains contact with the leading edge of the rotor blade 2 as the support assembly 13 is moved along the rotor blade 2. The spring-loaded rollers 12A and the heating assembly 1H are realised as a single unit so that any upward or downward displacement of the rollers 12A results in a corresponding vertical displacement D₁₀ of the heaters 10. The diagram also shows a distance sensor 19 arranged to sense a distance between the rotor blade surface and the heating assembly 1H. A control unit 14 (not shown) receives the measurement data and issues control commands to any actuators (adjustable telescopic support columns 10S, 11S) are indicated here) in order to maintain the sensed distance at a constant value.

The diagram also shows a temperature sensor 18 arranged to monitor the temperature of the heated portion Pₕₒₜ. The control unit 14 receives the sensed temperature and adjusts the travel speed of the apparatus 1 in order to maintain the sensed temperature at a constant value.

A second spring-loaded roller arrangement 12B maintains contact with the leading edge of the rotor blade 2 as the support assembly 13 is moved along the rotor blade 2. The spring-loaded roller 12B and the imaging assembly 1IR are realised as a single unit so that any upward or downward displacement of the roller 12B results in a corresponding displacement of the imaging assembly 1IR.

A position tracking means 15 assists in determining the geometrical coordinates of a detected anomaly. A position tracking means 15 can be realised for example as an encoder of the displacement means 13M, and can have a favourably low resolution so that the position of the inspection apparatus 1 can be precisely established relative to a certain reference, for example relative to the beginning of the adhesive layer 30.

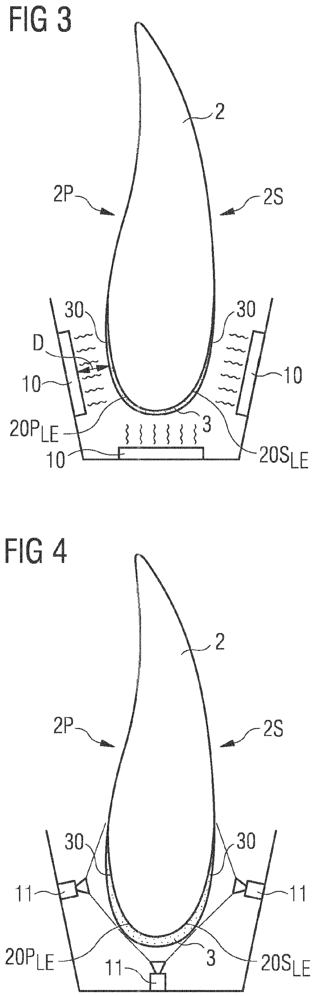

Figure 3 shows a cross-section through a rotor blade 2 during the inventive method. The diagram shows how the adhesive layer 30 may be heated by an arrangement of heat sources 10 such as curing lamps. Here, an arrangement using three heaters 10 is shown. However, an arrangement using only two heaters 10 is equally possible.

Figure 4 shows a cross-section through a rotor blade 2 during a subsequent stage of the inventive method, and shows how the heated adhesive layer 30 is imaged by cameras 11 of an infrared imaging assembly. Here, an arrangement using three cameras 11 is shown. However, an arrangement using only two cameras 11 is equally possible, for example two image sensors, each with a favourably wide field of view, may be arranged relative to the leading edge to capture images covering the entire adhesive layer 30.

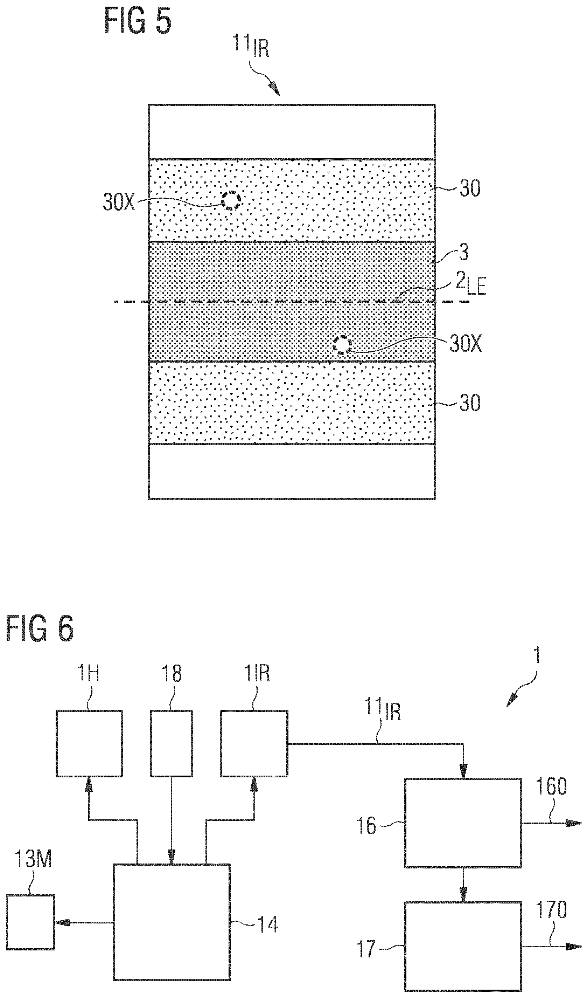

Figure 5 is a simplified schematic to explain the interpretation of an infrared image 11_{IR} obtained as described above. The sensor output of the cameras 11 shown in Figure 2 and Figure 4 are combined to give a composite image 11_{IR} of a heated section of the adhesive layer 30. The leading edge LE is indicated by the dashed line overlaid on the image 11_{IR}, and the image 11_{IR} shows a section of the LEP 3 extending into the pressure side and also a corresponding section of the LEP 3 extending into the suction side. The different materials result in different intensities (or colours) in the infrared image 11_{IR}. Here, regions of low intensity within the adhesive 30 indicate defects 30X in the adhesive layer 30. With this knowledge, the LEP 3 and adhesive layer 30 can be opened at precisely those locations in order to repair the defects 30X and to obtain a high-quality adhesive layer before the rotor blade leaves the manufacturing facility.

Figure 6 shows a simplified block diagram of an exemplary embodiment of the inventive inspection apparatus 1. The diagram shows a control unit 14 that choreographs the activities of a heating assembly 1H, an infrared imaging means 1IR and a drive unit 13M of the wheeled support 13 shown in Figure 2. Images 11_{IR} captured by the infrared imaging means 1IR are forwarded to an image processing module 16, which can detect anomalies in the adhesive layer as explained in Figure 5 above. The image processing module 16 may also be configured to output a colour-enhanced image 160 that can be shown in a computer display, for example. The diagram also indicates an optional temperature sensing means 18 which is provided to measure the temperature of the heated portion Pₕₒₜ. One or more temperature sensors 18 can be arranged at suitable positions in the inspection apparatus, for example these can be mounted to the heating assembly, "downstream" of the curing lamps as indicated in Figure 2. The temperature sensors can deliver useful data regarding the actual temperatures in the heated portion Pₕₒₜ, and this information can be used to calibrate the inspection procedure, to assist in evaluating the infrared images, to choose colours for the false-colour images, etc. The diagram also indicates a defect reporting module 17 configured to generate an output signal 170 to report a detected anomaly 30X and the position of that anomaly 30X.

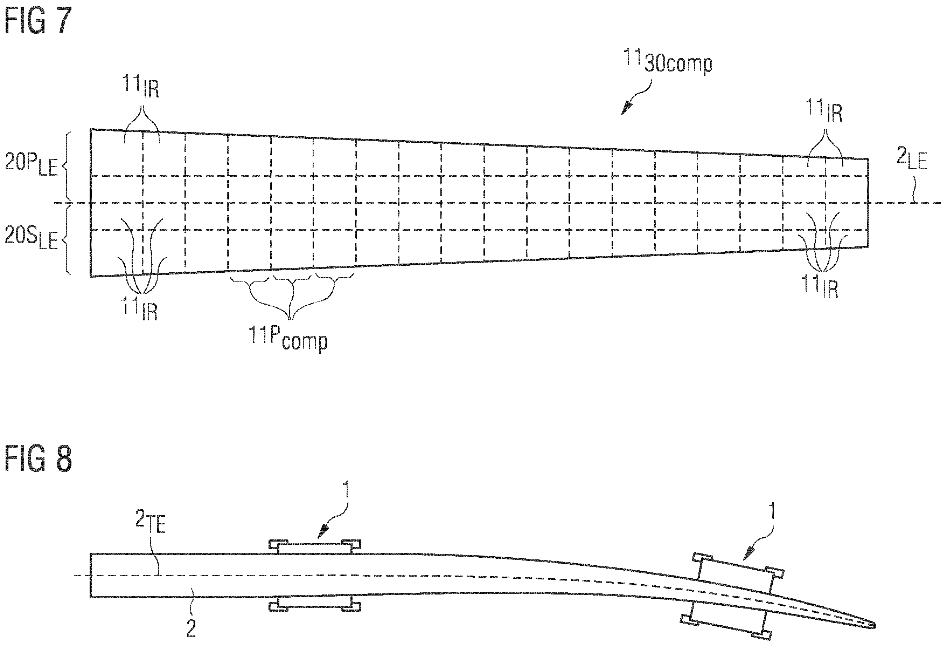

Figure 7 indicates an exemplary collection of images 11_{IR} collected by the imaging means of the inventive inspection apparatus as described above. Starting from the left-hand "short edge" of the LEP 3 and its adhesive strip 30, images 11_{IR} of each heated portion are collected as the inspection apparatus 1 is moved in the direction of the other short edge of the LEP 3 and its adhesive strip 30. For each heated portion Pₕₒₜ, three or more images 11_{IR} may be collected. Each such group of images 11_{IR} may be combined to give a composite image 11_{P_comp} of that heated portion. Equally, all the images 11_{IR}, or all the composite images 11_{P_comp} of the heated portions, may be combined to give a composite image 11_{30_comp} showing the entire adhesive layer.

Figure 8 shows the inventive inspection apparatus 1 being used to inspect the adhesive layer underneath an LEP applied to a pre-bent rotor blade 2. The diagram shows the assembly from above. The rotor blade 2 is held horizontally, with its chord plane vertical and its trailing edge 2_{TE} pointing upwards. As the diagram shows, the trailing edge, and therefore also the leading edge, follows a curved trajectory instead of a straight line. The inspection procedure commences with the apparatus 1 at an inboard region of the rotor blade 2, and the apparatus 1 is moved towards the tip region. The displacement means controls the inspection apparatus 1 to follow the curved trajectory of the leading edge.

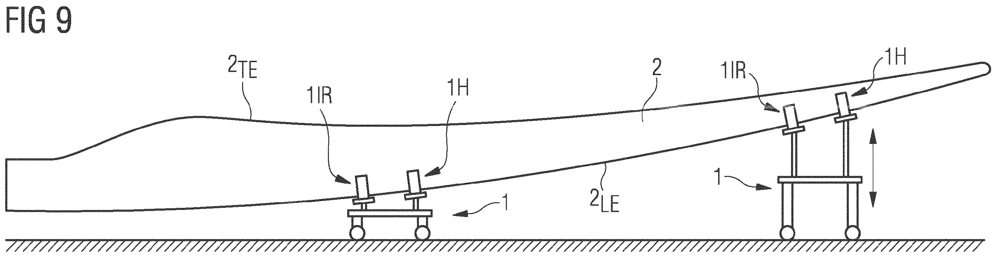

Figure 9 shows the inventive inspection apparatus 1 being used to inspect the adhesive layer underneath an LEP applied to a swept rotor blade 2 (shown with considerable exaggeration). The diagram shows the assembly from the side. Here also, the rotor blade 2 is held essentially horizontally, with its trailing edge 2_{TE} pointing upwards and its leading edge 2_{LE} pointing downwards. As the diagram shows, the leading edge 2_{LE} follows a curved upwards trajectory instead of a horizontal straight line. The inspection procedure commences with the apparatus 1 at an inboard region of the rotor blade 2, and the apparatus 1 is moved towards the tip region. The displacement means controls the inspection apparatus 1 to rise upwards in order to follow the upwardly curved trajectory of the leading edge 2_{LE}.

Although the present invention has been disclosed in the form of preferred embodiments and variations thereon, it will be understood that numerous additional modifications and variations could be made thereto without departing from the scope of the invention. For example, the inspection apparatus could be adapted for inspection procedures of an adhesive layer on the leading edge of an already installed rotor blade. Furthermore, the inspection apparatus is not limited to the inspection of an adhesive layer on a wind turbine rotor blade, but can be used to detect defects in an adhesive layer on essentially any curved body.

For the sake of clarity, it is to be understood that the use **of "a"** or "an" throughout this application does not exclude a plurality, and "comprising" does not exclude other steps or elements.

## Claims

1. An apparatus (1) for inspecting an essentially rectangular adhesive layer (30) applied about the leading edge (20P_{LE}, 20S_{LE}, 2_{LE}) of a wind turbine rotor blade (2), which rotor blade (2) has an essentially U-shaped leading edge protector (3) bonded in place by the adhesive layer (30), the adhesive layer (30) extending some distance on either side of a junction between the pressure side (20P) and the suction side (20S) of the rotor blade (2), which apparatus (1) comprises
- an essentially U-shaped heating assembly (1H) configured to direct heat at a portion (P, Pₕₒₜ) of the adhesive layer (30) between the outer edges (30P, 30S) of the adhesive layer (30);
- an infrared imaging means (1IR) arranged to obtain an infrared image (11_{IR}) of a heated portion (Pₕₒₜ);
- a displacement means (13, 14) adapted to move the inspection apparatus (1) alongside the rotor blade (2) during operation of the heating assembly (1H) and the infrared imaging means (1IR) to facilitate infrared imaging of the adhesive layer (30).

2. An inspection apparatus according to the preceding claim, wherein the displacement means comprises a guide assembly adapted to maintain an essentially constant distance (D) between the heating assembly (1H) and the adhesive layer (30).

3. An inspection apparatus according to any of the preceding claims, wherein the displacement means comprises a number of spring-mounted rollers (12A, 12B) adapted to roll along the surface (2S, 2P) of the rotor blade (2).

4. An inspection apparatus according to any of the preceding claims, wherein the heating assembly (1H) is mounted on a telescopic support (10S).

5. An inspection apparatus according to any of the preceding claims, comprising an image processing module (19) configured to detect an anomaly (D) in the adhesive layer (30) from evaluation of the infrared images (11_{IR}).

6. An inspection apparatus according to any of the preceding claims, comprising a defect reporting module (17) configured to report a detected anomaly (30X) and the position of that anomaly (30X).

7. An inspection apparatus according to any of the preceding claims, comprising a position tracking means (15) adapted to determine the position of the infrared imaging means (1IR) relative to the rotor blade (2).

8. An inspection apparatus according to any of the preceding claims, wherein the heating assembly (1H) comprises a plurality of heat sources (10) arranged in a U-shaped configuration.

9. An inspection apparatus according to any of the preceding claims, wherein the infrared imaging means (1IR) comprises a plurality of cameras, and comprises at least one camera (11) arranged to obtain an image (11_{IR}) of the heated portion (Pₕₒₜ) of the adhesive layer (30) on the suction side of the rotor blade (2) and at least one camera (11) arranged to obtain an image (11_{IR}) of the heated portion (Pₕₒₜ) of the adhesive layer (30) on the pressure side of the rotor blade (2).

10. An inspection apparatus according to any of the preceding claims, wherein the displacement means (13M) is adapted to move the inspection apparatus (1) at an essentially constant rate.

11. An inspection apparatus according to any of the preceding claims, wherein at least the heating assembly (1H) and the infrared imaging means (1IR) are mounted on a wheeled support (13) and the displacement means comprises a motor (13M) configured to drive the wheels of the support (13).

12. An inspection apparatus according to any of the preceding claims, comprising a temperature sensing means (18) arranged to measure the temperature of the heated portion (Pₕₒₜ).

13. A method of inspecting an adhesive layer (30) applied about the leading edge (20P_{LE}, 20S_{LE}, 2_{LE}) of a wind turbine rotor blade (2) using the apparatus (1) of any of claims 1 to 12, which method comprises at least the steps of
A) actuating the heating assembly (1H) to direct heat at a portion (P, Pₕₒₜ) of the adhesive layer (30);
B) actuating the infrared imaging means (1IR) to obtain a number of infrared images (11_{IR}) of the heated portion (Pₕₒₜ); and
displacing the inspection apparatus (1) alongside the rotor blade (2) over the extent of the adhesive layer (30) while repeating steps A and B.

14. A method according to claim 13, wherein the infrared imaging means (1IR) comprises a plurality of cameras (11), and the method comprises a step of joining images (11_{IR}) to obtain a composite image (11_{P_comp}) of a heated portion (Pₕₒₜ) of the adhesive layer (30).

15. A method according to claim 14, comprising a step of joining multiple composite images (11_{P_comp}) of the heated portions (Pₕₒₜ) to obtain a composite image (11_{30_comp}) for the entire adhesive layer (30).

## Patentansprüche

1. Vorrichtung (1) zum Untersuchen einer im Wesentlichen rechteckigen Klebeschicht (30), die um die Vorderkante (20P_{LE}, 20S_{LE}, 2_{LE}) eines Windturbinen-Rotorblatts (2) aufgebracht ist, wobei das Rotorblatt (2) einen im Wesentlichen U-förmigen Vorderkantenschutz (3) aufweist, der durch die Klebeschicht (30) an Ort und Stelle verklebt ist, wobei sich die Klebeschicht (30) auf jeder Seite einer Verbindungsstelle zwischen der Druckseite (20P) und der Saugseite (20S) des Rotorblatts (2) über eine gewisse Distanz erstreckt, wobei die Vorrichtung (1) Folgendes umfasst
- eine im Wesentlichen U-förmige Heizbaugruppe (1H), die dazu konfiguriert ist, Wärme an einen Abschnitt (P, Pₕₒₜ) der Klebeschicht (30) zwischen den Außenkanten (30P, 30S) der Klebeschicht (30) zu leiten;
- ein Infrarotbildgebungsmittel (1IR), das dazu angeordnet ist, ein Infrarotbild (11_{IR}) eines erwärmten Abschnitts (Pₕₒₜ) zu erhalten;
- ein Verschiebungsmittel (13, 14), das dazu ausgelegt ist, die Untersuchungsvorrichtung (1) während des Betriebs der Heizbaugruppe (1H) und des Infrarotbildgebungsmittels (1IR) entlang des Rotorblatts (2) zu bewegen, um eine Infrarotbildgebung der Klebeschicht (30) zu ermöglichen.

2. Untersuchungsvorrichtung nach dem vorhergehenden Anspruch, wobei das Verschiebungsmittel eine Führungsbaugruppe umfasst, die dazu ausgelegt ist, einen im Wesentlichen konstanten Abstand (D) zwischen der Heizbaugruppe (1H) und der Klebeschicht (30) aufrechtzuerhalten.

3. Untersuchungsvorrichtung nach einem der vorhergehenden Ansprüche, wobei das Verschiebungsmittel eine Anzahl von federnd montierten Rollen (12A, 12B) umfasst, die dazu ausgelegt sind, entlang der Oberfläche (2S, 2P) des Rotorblatts (2) zu rollen.

4. Untersuchungsvorrichtung nach einem der vorhergehenden Ansprüche, wobei die Heizbaugruppe (1H) auf einer teleskopierbaren Stütze (10S) montiert ist.

5. Untersuchungsvorrichtung nach einem der vorhergehenden Ansprüche, umfassend ein Bildverarbeitungsmodul (19), das dazu konfiguriert ist, eine Anomalie (D) in der Klebeschicht (30) aus einer Auswertung der Infrarotbilder (11_{IR}) zu erkennen.

6. Untersuchungsvorrichtung nach einem der vorhergehenden Ansprüche, umfassend ein Defektmeldemodul (17), das dazu konfiguriert ist, eine erkannte Anomalie (30X) und die Position dieser Anomalie (30X) zu melden.

7. Untersuchungsvorrichtung nach einem der vorhergehenden Ansprüche, umfassend ein Positionsverfolgungsmittel (15), das dazu ausgelegt ist, die Position des Infrarotbildgebungsmittels (1IR) relativ zu dem Rotorblatt (2) zu bestimmen.

8. Untersuchungsvorrichtung nach einem der vorhergehenden Ansprüche, wobei die Heizbaugruppe (1H) eine Vielzahl von Wärmequellen (10) umfasst, die in einer U-förmigen Konfiguration angeordnet sind.

9. Untersuchungsvorrichtung nach einem der vorhergehenden Ansprüche, wobei das Infrarotbildgebungsmittel (1IR) eine Vielzahl von Kameras umfasst und mindestens eine Kamera (11), die dazu angeordnet ist, ein Bild (11_{IR}) des erwärmten Abschnitts (Pₕₒₜ) der Klebeschicht (30) auf der Saugseite des Rotorblatts (2) zu erhalten, und mindestens eine Kamera (11), die dazu angeordnet ist, ein Bild (11_{IR}) des erwärmten Abschnitts (Pₕₒₜ) der Klebeschicht (30) auf der Druckseite des Rotorblatts (2) zu erhalten, umfasst.

10. Untersuchungsvorrichtung nach einem der vorhergehenden Ansprüche, wobei das Verschiebungsmittel (13M) dazu ausgelegt sind, die Untersuchungsvorrichtung (1) in einem im Wesentlichen konstanten Tempo zu bewegen.

11. Untersuchungsvorrichtung nach einem der vorhergehenden Ansprüche, wobei mindestens die Heizbaugruppe (1H) und das Infrarotbildgebungsmittel (1IR) auf einem mit Rädern versehenen Gestell (13) montiert sind und das Verschiebungsmittel einen Motor (13M) umfasst, der dazu konfiguriert ist, die Räder des Gestells (13) anzutreiben.

12. Untersuchungsvorrichtung nach einem der vorhergehenden Ansprüche, umfassend ein Temperaturerfassungsmittel (18), das dazu angeordnet ist, die Temperatur des erwärmten Abschnitts (Pₕₒₜ) zu messen.

13. Verfahren zum Untersuchen einer Klebeschicht (30), die um die Vorderkante (20P_{LE}, 20S_{LE}, 2_{LE}) eines Windturbinen-Rotorblatts (2) aufgebracht wird, unter Verwendung der Vorrichtung (1) nach einem der Ansprüche 1 bis 12, wobei das Verfahren mindestens die folgenden Schritte umfasst
A) Betätigen der Heizbaugruppe (1H), um Wärme an einen Abschnitt (P, Pₕₒₜ) der Klebeschicht (30) zu leiten;
B) Betätigen des Infrarotbildgebungsmittels (1IR), um eine Anzahl von Infrarotbildern (11_{IR}) des erwärmten Abschnitts (Pₕₒₜ) zu erhalten; und
Verschieben der Untersuchungsvorrichtung (1) entlang des Rotorblatts (2) über die Ausdehnung der Klebeschicht (30), während die Schritte A und B wiederholt werden.

14. Verfahren nach Anspruch 13, wobei das Infrarotbildgebungsmittel (1IR) eine Vielzahl von Kameras (11) umfasst und das Verfahren einen Schritt des Verbindens von Bildern (11_{IR}) umfasst, um ein zusammengesetztes Bild (11_{P_comp}) eines erwärmten Abschnitts (Pₕₒₜ) der Klebeschicht (30) zu erhalten.

15. Verfahren nach Anspruch 14, umfassend einen Schritt des Verbindens mehrerer zusammengesetzter Bilder (11_{P_comp}) der erwärmten Abschnitte (Pₕₒₜ), um ein zusammengesetztes Bild (ll_{30_comp}) für die gesamte Klebeschicht (30) zu erhalten.

## Revendications

1. Appareil (1) pour l'inspection d'une couche adhésive (30) essentiellement rectangulaire appliquée autour du bord d'attaque (20P_{LE}, 20S_{LE}, 2_{LE}) d'une pale de rotor d'éolienne (2), laquelle pale de rotor (2) comporte un protecteur de bord d'attaque (3) essentiellement en forme de U lié en place par la couche adhésive (30), la couche adhésive (30) s'étendant sur une certaine distance de chaque côté d'une jonction entre l'extrados (20P) et l'intrados (20S) de la pale de rotor (2), lequel appareil (1) comprend :
- un ensemble de chauffage (1H) essentiellement en forme de U configuré pour diriger de la chaleur au niveau d'une portion (P, Pₕₒₜ) de la couche adhésive (30) entre les bords extérieurs (30P, 30S) de la couche adhésive (30) ;
- un moyen d'imagerie infrarouge (1IR) agencé pour obtenir une image infrarouge (11_{IR}) d'une portion chauffée (Pₕₒₜ) ;
- un moyen de déplacement (13, 14) adapté pour déplacer l'appareil d'inspection (1) le long de la pale de rotor (2) pendant le fonctionnement de l'ensemble de chauffage (1H) et du moyen d'imagerie infrarouge (1IR) pour faciliter l'imagerie infrarouge de la couche adhésive (30).

2. Appareil d'inspection selon la revendication précédente, dans lequel le moyen de déplacement comprend un ensemble de guidage adapté pour maintenir une distance (D) essentiellement constante entre l'ensemble de chauffage (1H) et la couche adhésive (30).

3. Appareil d'inspection selon l'une quelconque des revendications précédentes, dans lequel le moyen de déplacement comprend un certain nombre de rouleaux montés sur ressort (12A, 12B) adaptés pour rouler le long de la surface (2S, 2P) de la pale de rotor (2).

4. Appareil d'inspection selon l'une quelconque des revendications précédentes, dans lequel l'ensemble de chauffage (1H) est monté sur un support télescopique (10S).

5. Appareil d'inspection selon l'une quelconque des revendications précédentes, comprenant un module de traitement d'image (19) configuré pour détecter une anomalie (D) dans la couche adhésive (30) à partir de l'évaluation des images infrarouges (11_{IR}).

6. Appareil d'inspection selon l'une quelconque des revendications précédentes, comprenant un module de rapport de défaut (17) configuré pour rapporter une anomalie détectée (30X) et la position de cette anomalie (30X).

7. Appareil d'inspection selon l'une quelconque des revendications précédentes, comprenant un moyen de suivi de position (15) adapté pour déterminer la position du moyen d'imagerie infrarouge (1IR) par rapport à la pale de rotor (2).

8. Appareil d'inspection selon l'une quelconque des revendications précédentes, dans lequel l'ensemble de chauffage (1H) comprend une pluralité de sources de chaleur (10) agencées selon une configuration en forme de U.

9. Appareil d'inspection selon l'une quelconque des revendications précédentes, dans lequel le moyen d'imagerie infrarouge (1IR) comprend une pluralité de caméras, et comprend au moins une caméra (11) agencée pour obtenir une image (11_{IR}) de la portion chauffée (Pₕₒₜ) de la couche adhésive (30) sur l'intrados de la pale de rotor (2) et au moins une caméra (11) agencée pour obtenir une image (11_{IR}) de la portion chauffée (Pₕₒₜ) de la couche adhésive (30) sur l'extrados de la pale de rotor (2).

10. Appareil d'inspection selon l'une quelconque des revendications précédentes, dans lequel le moyen de déplacement (13M) est adapté pour déplacer l'appareil d'inspection (1) à une vitesse essentiellement constante.

11. Appareil d'inspection selon l'une quelconque des revendications précédentes, dans lequel au moins l'ensemble de chauffage (1H) et le moyen d'imagerie infrarouge (1IR) sont montés sur un support à roues (13) et le moyen de déplacement comprend un moteur (13M) configuré pour entraîner les roues du support (13).

12. Appareil d'inspection selon l'une quelconque des revendications précédentes, comprenant un moyen de détection de température (18) agencé pour mesurer la température de la portion chauffée (Pₕₒₜ).

13. Procédé d'inspection d'une couche adhésive (30) appliquée autour du bord d'attaque (20P_{LE}, 20S_{LE}, 2_{LE}) d'une pale de rotor d'éolienne (2) en utilisant l'appareil (1) selon l'une quelconque des revendications 1 à 12, lequel procédé comprend au moins les étapes consistant à :
A) actionner l'ensemble de chauffage (1H) pour diriger de la chaleur au niveau d'une portion (P, Pₕₒₜ) de la couche adhésive (30) ;
B) actionner le moyen d'imagerie infrarouge (1IR) pour obtenir un certain nombre d'images infrarouges (11_{IR}) de la portion chauffée (Pₕₒₜ) ; et
déplacer l'appareil d'inspection (1) le long de la pale de rotor (2) sur l'étendue de la couche adhésive (30) tout en répétant les étapes A et B.

14. Procédé selon la revendication 13, dans lequel le moyen d'imagerie infrarouge (1IR) comprend une pluralité de caméras (11), et le procédé comprend une étape consistant à joindre des images (11_{IR}) pour obtenir une image composite (11_{P_comp}) d'une portion chauffée (Pₕₒₜ) de la couche adhésive (30).

15. Procédé selon la revendication 14, comprenant une étape consistant à joindre de multiples images composites (11_{P_comp}) des portions chauffées (Pₕₒₜ) pour obtenir une image composite (ll_{30_comp}) pour l'intégralité de la couche adhésive (30) .
